(19) Europäisches Patentamt
European Patent Office
Office européen des brevets

(11) EP 0 490 191 B1

(12) **EUROPÄISCHE PATENTSCHRIFT**

(45) Veröffentlichungstag und Bekanntmachung des Hinweises auf die Patenterteilung:
**18.06.1997 Patentblatt 1997/25**

(51) Int Cl.[6]: **C09J 133/06**, C08K 5/06

(21) Anmeldenummer: **91120548.2**

(22) Anmeldetag: **29.11.1991**

(54) **Lösungsmittelfreie Klebstoffzusammensetzung auf Basis eines wässrigen Acrylatlatex**

Solventless adhesive composition based on an aqueous acrylic latex

Composition adhésive sans solvant à base d'un latex acrylique aqueux

(84) Benannte Vertragsstaaten:
**DE FR GB IT SE**

(30) Priorität: **13.12.1990 DE 4039781**

(43) Veröffentlichungstag der Anmeldung:
**17.06.1992 Patentblatt 1992/25**

(73) Patentinhaber: **BASF Aktiengesellschaft
67063 Ludwigshafen (DE)**

(72) Erfinder:
- **Schwerzel, Thomas, Dr.
W-6701 Meckenheim (DE)**
- **Fickeisen, Peter
W-6716 Dirmstein (DE)**
- **Neumann, Hans J.
W-6706 Wachenheim (DE)**

(56) Entgegenhaltungen:
**EP-A- 0 084 829** **EP-A- 0 221 461**
**US-A- 4 654 388**

- **PATENT ABSTRACTS OF JAPAN vol. 6, no. 57 (C-98)(935)**

EP 0 490 191 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft die Verwendung einer Klebstoffzusammensetzung mit weniger als 2 Gew.-% organischer Lösemittel mit einem Flammpunkt unter 100°C nach DIN 51758 enthaltend

A) einen wäßrigen Acrylatlatex und

B) 30 bis 150 Gew.-%, bezogen auf den Feststoffgehalt des Acrylatlatex A), einer Mischung aus

b1) 50 b50 bis 95 Gew.-%, bezogen auf die Mischung, mindestens eines kiebrigmachenden Harzes und

b2) 5 bis 50 Gew.-%, bezogen auf die Mischung, einer Verbindung der allgemeinen Formel I

$$R^1\text{-O-(X-O)}_n\text{-}R^2 \qquad \text{I},$$

in der X ein Alkylen mit 2 bis 4 C-Atomen, n eine ganze Zahl von 1 bis 8 und $R^1$ und $R^2$ Wasserstoff oder ein Aryl- oder Alkarylrest mit 6 bis 12 C-Atomen sind, wobei $R^1$ und $R^2$ nicht gleichzeitig Wasserstoff sind, zum Verkleben von Fußbodenbelägen.

Bei den bekannten Klebstoffzusammensetzungen, die zum Verkleben von Fußbodenbelägen verwendet werden, lassen sich 3 Produktklassen unterscheiden:

Lösemittelhaltige Kleber - die sogenannten Kunstharzkleber -, die aus einem Kolophoniumharz, wie z.B. Balsamharz, einer Kreide sowie Polyvinylether z.B. Polyvinylethylether als Weichmacher hergestellt werden. Diese Kleber enthalten zusätzlich noch 20 - 30 % an organischen Lösungsmitteln wie z.B. Methanol, Ethanol, Ethylacetat etc. und andere Kohlenwasserstoffe. Diese Kleber sind weit verbreitet, da sie sich vor allem auch bei niedriger Temperatur gut verarbeiten lassen und im allgemeinen ein gutes Anzugsvermögen und gute Haftzugsfestigkeiten der Verklebung ergeben. Ein großer Nachteil dieser Klasse von Klebstoffen ist die hohe Menge an organischen Lösemitteln. Diese werden bei der Verarbeitung durch Verdampfen freigesetzt und führen somit zu einer erheblichen Geruchsbelästigung, die u.U. sogar eine gesundheitliche Gefährdung des Bodenlegers nach sich ziehen kann. Weiterhin muß bei der Verarbeitung dieser Kleber beachtet werden, daß, bedingt durch das Verdampfen, explosive Lösemittel-Luftgemische entstehen können.

Eine weitere Klasse von verbreiteten Klebstoffen sind Dispersionsklebstoffe wie sie beispielsweise aus DE-A 2 301 497 oder aus EP-A 221 461 bekannt sind. Sie bestehen aus einem wäßrigen Acrylatlatex, Balsamharz und Füllstoffen, wobei das Balsamharz in einem organischen, noch niedrigsiedenden Lösemittel mit einem Flammpunkt, der in der Regel unter 55°C liegt, aufgelöst ist. Als Lösemittel werden hier rein organische Lösemittel wie z.B. Toluol oder Xylol verwendet. Der Gehalt an Lösemittel dieser Systeme liegt bei ca. 3 - 5 Gew.-%. Die Lösemittel in diesen Dispersionsklebern haben einen Einfluß auf das Abbindeverhalten der Kleber (E.A. Theiling, Adhäsion, 1972, S. 428 ff.).

Neuere Bestrebungen gehen dahin, daß man anstelle dieser Dispersionskleber, die noch geringe Mengen an Lösemitteln enthalten, lösemittelfreie Kleber herzustellen versucht. Unter lösemittelfrei versteht man in diesem Fall, daß anstelle der niedrigsiedenden, leicht brennbaren Lösemittel nur sehr hochsiedende Lösemittel z.Tl. auch polymere Weichmacher verwendet werden. Diese Systeme bestehen z.B. aus einer Polymerdispersion, einem Kolophoniumharz, das in Form einer Harzschmelze in einem Hochsieder in das System eingearbeitet wird, sowie Füllstoffen und sonstigen Hilfsmitteln.

So beschreibt die US-A 4 654 388 einen Fußbodenkleber, der aus einem filmbildenden Acrylatlatex, Füllstoff, Diethylenglykolmonobutylether und als klebrigmachendem Harz eine Mischung aus Kolophoniumnarz- und -ester besteht. Diese Systeme haben den Nachteil, daß die Wärmestandfestigkeit in der Regel äußerst gering ist.

Aus EP-A-084 829 ist bekannt, daß die oben definierten Komponenten $b_1$ und $b_2$ Polymerlatices zugesetzt werden und so Klebstoffe erhalten werden können.

Aufgabe der vorliegenden Erfindung war es daher, im wesentlichen lösungsmittelfreie Klebstoffzusammensetzungen bereitzustellen, die leicht herstellbar sind und die oben angegebenen Nachteile vermeiden.

Demgemäß wurde die oben definierte Verwendung gefunden.

Vorteilhafte Ausgestaltung der Erfindung sind in Unteransprüchen zu entnehmen.

Im wesentlichen lösungsmittelfreie Klebstoffzusammensetzungen enthalten weniger als 2, bevorzugt weniger als 0,5 Gew.-% leichtsiedender organischer Lösungsmittel, d.h. solche mit einem Flammpunkt unter 100, bevorzugt unter 55°C, gemessen nach DIN 51758. Beispiele sind Toluol, Xylol oder Ethanol.

Die Klebstoffzusammensetzung hat für die Anwendung übliche Feststoffgehalte und Viskositäten. Bevorzugt wird

ein Feststoffgehalt von 60 bis 85 Gew.-% und eine Viskosität von 2 bis 20 Pas bei 23°C.

Der Einsatz von Acrylatlatices in Klebstoffzusammensetzungen ist allgemein bekannt. Ein großer Teil, im allgemeinen mehr als 25 Gew.-% der Monomerbausteine im Acrylatlatex A), sind Acrylate und/oder Methacrylate von 1 bis 24 C-Atome enthaltenden Alkoholen.

Bevorzugt werden Acrylatpolymere aus

a) 70 bis 99,5, speziell 85 bis 99,5 Gew.-% mindestens eines Monomeren ausgewählt aus der Gruppe aus Estern der Acryl- und Methacrylsäure von 1 bis 24 C-Atome enthaltenden Monoalkoholen, Vinyl- und Allylester von 1 bis 20 C-Atome enthaltenden Carbonsäuren, Vinylether von 1 bis 8 C-Atome enthaltenden Alkoholen, Vinylaromaten, Vinylhalogeniden und nichtaromatischen Kohlenwasserstoffen mit 2 bis 8 C-Atomen und mindestens einer olefinischen Doppelbindung,

b) 0,5 bis 30, speziell 0,5 bis 15 Gew.-% jeweils bezogen auf das Polymer, mindestens eines Monomeren ausgewählt aus α, β-ungesättigen Mono- oder Dicarbonsäuren mit 3 bis 6 C-Atomen, deren Amiden, deren Estern von Hydroxyalkoholen bis zu 20 C-Atomen, die Ethergruppen enthalten können, ethylenisch ungesättigten Nitrilen mit 3 bis 6 C-Atomen und olefinisch ungesättigten Sulfonsäuren mit 2 bis 6 C-Atomen und deren Salzen und

c) 0 bis 5, speziell 0 Gew.-% weiterer copolymerisierbarer Monomerer.

Als Monomere a) kommen Ester der Acryl- oder Methacrylsäure von 1 bis 24 C-Atome enthaltenden Monoalkoholen, bevorzugt Monoalkanolen in Frage. Genannt seien Hexyl(meth)acrylat, Lauryl- oder Stearyl(meth)acrylat, Cyclohexylacrylat, Phenylethylmethacrylat, Methylacrylat, Ethylacrylat und n-, s- und t-Butyl(meth)acrylat, Benzylmethacrylat, Cyclohexylmethacrylat und vor allem Methylmethacrylat, Ethylmethacrylat, 2-Ethylhexylacrylat und n-Butylacrylat.

Weiterhin kommen in Frage Vinyl- und Allylester von Carbonsäuren mit 1 bis 20 C-Atomen wie Allylacetat und Allylpropionat, Vinylformiat, -laurat, -stearat und speziell Vinylpropionat und Vinylacetat.

Vinylether von Alkanolen mit 1 bis 8 C-Atomen sind beispielsweise Vinylmethylether, Vinylethylether, Vinylisopropylether und Vinylbutylether.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens einer olefinischen Doppelbindung seien Ethylen, Propylen, n-, und i-Buten, Butadien, Isopren und Chloropren genannt.

Monomere b) sind Acrylsäure, Methacrylsäure, Itaconsäure, Maleinsäure, Fumarsäure, Crotonsäure, Acrylamid, Methacrylamid, Hydroxyalkyl(meth)acrylate wie 2-Hydroxyethylacrylat, 2-Hydroxypropylacrylat oder Hydroxybutylacrylate, Acrylnitril, Methacrylnitril und Vinylsulfonsäure oder dessen Natriumsalz, bevorzugt Acrylsäure, Acrylamid, Methacrylamid und Acrylnitril.

Insgesamt werden die Gewichtsanteile der am Aufbau des Acrylatpolymeren beteiligten Monomeren vorzugsweise so gewählt, daß das Polymerisat A eine Glasübergangstemperatur (Tg) von -60°C bis 0°C, vorzugsweise von -50°C bis -10°C aufweist. Die Glasübergangstemperatur ist in bekannter Weise z.B. durch Messung des E-Moduls im Kriechversuch als Funktion der Temperatur meßbar (s. dazu A. Zosel, Farbe und Lack 82 (1976), 125-134). Eine Vorausberechnung der Glasübergangstemperatur ist aus den Gewichtsanteilen der am Aufbau eines Polymeren beteiligten Monomeren nach der Beziehung von Fox möglich. Nach Fox (T.G. Fox, Bull. Am. Phys. Soc. (Ser. II) 1, 123 (1956) gilt für die Glasübergangstemperatur von Mischpolymerisaten in guter Näherung:

$$\frac{1}{Tg} = \frac{X^1}{Tg^1} + \frac{X^2}{Tg^2} + \ldots\ldots \frac{X^n}{Tg^n},$$

wobei, $X^1$, $X^2$, ..., $X^n$ die Massenbrüche der Monomeren 1, 2, ..., n und $Tg^1$, $Tg^2$, ..., $Tg^n$ die Glasübergangstemperaturen der jeweils nur aus einem der Monomeren 1, 2, ... oder n aufgebauten Polymeren in Grad Kelvin bedeuten. Die Glasübergangstemperaturen dieser Homopolymerisate der oben aufgeführten Monomeren sind im wesentlichen bekannt und z.B. in J. Brandrup, E.H. Immergut, Polymer Handbook 1st Ed. J. Wiley, New York, 1966 und 2nd Ed. J. Wiley, New York, 1975 aufgeführt.

Die Herstellung der wäßrigen Acrylatlatices erfolgt im allgemeinen nach den bekannten Methoden der Emulsionspolymerisation (s. z.B. Houben-Weyl, Methoden der Org. Chemie, Georg Thieme Verlag, 4. Auflage, Band E20 Teil I, 1987, Seiten 215 und ff.). Unter Verwendung der bekannten Emulgatoren und wasserlöslichen Initiatoren wie Wasserstoffperoxid oder Alkalipersulfat, vorteilhaft in Kombination in wasserlöslichen Reduktionsmitteln wie Formaldehydsulfoxilat, Thiosulfat, Natriumpyrosulfit oder Ascorbinsäure. Als Emulgatoren können die üblichen anionischen und gegebenenfalls nichtionischen Dispergiermittel in den üblichen Mengen, die zwischen 0,5 und 6, insbesondere zwischen 2 und 5 Gew.-%, bezogen auf die Monomeren, liegen, eingesetzt werden. Als Beispiele hierfür seien Natriumlaurylsulfat, Natriumdodecylbenzolsulfonat und die Alkalisalze von sauren Schwefelsäureestern von Alkylenoxiden an Octyl- oder Nonylphenol, die meist 5 bis 50 mol Ethylenoxid und/oder Propylenoxid angelagert enthalten, sowie Ethylenoxidaddukte an Fettalkohole mit meist 5 bis 50 mol angelagertem Ethylenoxid genannt. Die Emulsionspolymerisation kann im allgemeinen bei Temperaturen von 30 bis 150°C, insbesondere bei 50 bis 90°C erfolgen. Zur Herstellung der Latices ist es zudem vorteilhaft, in einem pH-Bereich von 3 bis 9 zu arbeiten, damit die Dispersionen gegenüber pH-Änderungen hinreichend stabil werden. Die wäßrigen Acrylatdispersionen A) enthalten vorzugsweise sowohl anionische als auch nichtionische Emulgatoren der genannten Art. Erreicht wird im allgemeinen ein Polymer- bzw. Feststoffgehalt von 40 bis 65 Gew.-%, meßbar nach DIN 53189.

Die Mischung B) wird vorzugsweise in Mengen von 70 bis 130 Gew.-%, bezogen auf den Feststoffgehalt des Acrylatlatex A) eingesetzt. Gute Ergebnisse werden erzielt, wenn 60 bis 95 und insbesondere 70 bis 90 Gew.-% b1) und 5 bis 40, insbesondere 10 bis 30 Gew.-% b2), jeweils bezogen auf die Mischung B, verwendet werden.

Klebrigmachende Harze b1) werden in US-A 4 654 388 beschrieben. Bevorzugt wird als b1) Kolophonium, wie z. B. Balsamharze und deren Derivate, insbesondere Balsamharz WW. Dabei handelt es sich um ein Harz mit einem Schmelzbereich von 60 bis 80°C, das im Handel erhältlich ist. Es können auch Mischungen von Harzen eingesetzt werden.

In der allgemeinen Formel I der Verbindung b2) ist $R^1$ beispielsweise Wasserstoff,

X beispielsweise

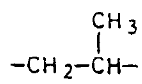

,

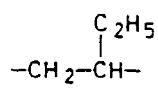

und bevorzugt

$-CH_2-CH_2-$ ,

n beispielsweise 2, 3 und bevorzugt 1 und

$R^2$ beispielsweise Phenyl.

Beispielhafte Verbindungen sind

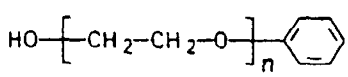

,

wobei n 2 oder 3 und insbesondere 1 (= Monophenylglykol) ist.

Die Herstellung der Mischung B) geschieht in der Weise, daß das Harz b1) zusammen mit der Verbindung b2) vorzugsweise unter mechanischer Bewegung erwärmt und bevorzugt aufgeschmolzen wird und üblicherweise unter Rühren im allgemeinen zwischen 90 und 110°C im Verlauf von 0,5 bis 5 Stunden zur Mischung B) verarbeitet wird, die dann im allgemeinen homogen ist.

Bevorzugte Klebstoffzusammensetzungen enthalten 50 bis 350, insbesondere 150 bis 250 Gew.-%, bezogen auf den Feststoffgehalt des Acrylatlatex A, mindestens eines Füllstoffs C). In Betracht kommen in bekannter Weise gegebenenfalls feingemahlene und gefällte Kreiden mit einem mittleren Teilchendurchmesser von im allgemeinen zwischen 2 und 10 µm und/oder Quarzmehl mit einem üblichen mittleren Teilchendurchmesser von 3 bis 20 µm.

Die Zusammensetzung kann ferner bekannte Zutaten wie Entschäumer, z.B. auf Basis von Mineralölen oder Silikonen und Verdicker, z.B. auf Basis von (Meth)acrylsäure-(Co)polymerisaten oder Weichmacher, z.B. Polypropylenglykolalkylphenylether enthalten.

Die Herstellung der lösungsmittelfreien Klebstoffzusammensetzung kann auf viele geeignete Weisen erfolgen. In vielen Fällen wird der wäßrige Acrylatlatex A), dem gegebenenfalls Zusätze oder auch Wasser zugemischt sind, bei einer Temperatur von 10 bis 90°C, bevorzugt 10 bis 60°C und insbesondere 15 bis 40°C vorgelegt. In diesen Latex wird unter Rühren die noch heiße Mischung B) in geschmolzenem Zustand, d.h. im allgemeinen mit einer Temperatur von 70 bis 100°C eingetragen. Üblicherweise geschieht dieses bei laborüblichen Mengen im kg-Bereich portionsweise oder kontinuierlich im Verlaufe von 5 Minuten bis 3 Stunden. Dabei kann über die Rührintensität die Verteilung der Harzschmelze in der wäßrigen Dispersion je nach gewünschtem Ergebnis eingestellt werden.

Anschließend wird, falls erforderlich, der Füllstoff C) unter Rühren eingemischt.

Die Einarbeitung kann aber auch so erfolgen, daß zuerst die Dispersion mit Hilfs- und Füllstoffen versetzt wird und anschließend die Komponente B eingearbeitet wird.

Die Klebstoffzusammensetzung ist gut zum Verkleben von Fußbodenbelägen geeignet. Dazu ist es vorteilhaft, die Zusammensetzung nach ihrer Herstellung mindestens 8 Tage bei Raumtemperatur zu lagern, bevor sie verarbeitet wird.

Der Kleber kann z.B. mit einer Zahnleiste auf den Untergrund aufgetragen werden. Nach dem üblichen Ablüften wird der Bodenbelag eingelegt. In der Verarbeitbarkeit ähnelt der neue Kleber lösungsmittelhaltigen Klebern. Die Klebstoffzusammensetzung weist ein gutes Niveau von anwendungstechnischen Eigenschaften wie Schälfestigkeit, Scherfestigkeit, Naßanzugsvermögen und Trockenanfaßvermögen und eine überraschend hohe Wärmestandfestigkeit auf.

Die in den folgenden Beispielen angegebenen Teile und Prozente beziehen sich, wenn nicht anders angegeben, auf das Gewicht.

Beispiele

Die eingesetzten, durch radikalisch initiierte Emulsionspolymerisation in wäßrigem Medium bei 80°C hergestellten Acrylatlatices sind in Tabelle 1 angegeben.

Tabelle 1

| Monomerzusammensetzung [Gew.-%] | | | Feststoffgehalt [Gew.-%] | Glastemperatur [°C] |
|---|---|---|---|---|
| A1 | 2-Ethylhexylacrylat | 89 | | |
| | Acrylnitril | 8 | 60 | -53 |
| | Acrylsäure | 3 | | |
| A2 | n-Butylacrylat | 89 | | |
| | Vinylacetat | 5 | | |
| | Acrylnitril | 3 | 65 | -40 |
| | Hydroxyethylacrylat | 2 | | |
| | Acrylsäure | 1 | | |
| A3 | n-Butylacrylat | 40 | | |
| | 2-Ethylhexylacrylat | 29 | 60 | -21 |
| | Vinylacetat | 28 | | |
| | Acrylsäure | 2 | | |
| A4 | n-Butylacrylat | 87 | | |
| | Acrylnitril | 10 | 55 | -21 |
| | Acrylsäure | 3 | | |

Herstellung von Mischungen B)

B) 80 Gew.-Teile Balsamharz WW wurden in Gegenwart von 20 Gew.-Teilen Monophenylglykol unter Rühren bei 95°C im Verlaufe von 3 Stunden aufgeschmolzen.

BV) Zum Vergleich wurde die Mischung BV hergestellt: Es wurde wie bei B) gearbeitet, jedoch wurde statt Monophenylglykol ein Additionsprodukt aus Kresol und Propylenoxid mit ca. 25 Propylenoxideinheiten (Plastilit® 3060 der

Fa. BASF AG) eingesetzt.

BV') Zur Herstellung der Vergleichsmischung BV' wurde wie bei B) gearbeitet, jedoch wurde statt Monophenylglykol Diethylenglykolmonobutylether eingesetzt.

Die folgenden Klebstoffzusammensetzungen der Beispiele 1 bis 4 und der Vergleichsversuche 1V bis 4V' wurden nach der folgenden allgemeinen Arbeitsvorschrift hergestellt:
Unter Rühren wird dem Acrylatlatex A) bei 23°C Entschäumer, Verdicker und gegebenenfalls Weichmacher zugegeben. Anschließend wird die heiße (95°C) Mischung B (BV, BV') unter Rühren im Verlaufe von 0,25 Stunden zugegeben und noch 0,1 Stunden nachgerührt. Anschließend wird der Füllstoff unter Rühren eingemischt und noch 0,1 Stunden nachgerührt.

Die Zusammensetzungen sind in Tabelle 2 dargestellt.

Tabelle 2

Klebstoffzusammensetzungen [Gew.-Teile]

| Einsatzstoffe | Beispiele | | | | | | | | |
|---|---|---|---|---|---|---|---|---|---|
| | 1 | 1V | 2 | 2V | 3 | 3V | 4 | 4V | 4V' |
| A1 | 32,1 | 32,1 | | | | | | | |
| A2 | | | 30,8 | 30,8 | | | | | |
| A3 | | | | | 32,1 | 32,1 | | | |
| A4 | | | | | | | 35,0 | 35,0 | 35,0 |
| Verdicker[1)] | | | | | | | | | |
| 1 %ige wäßrige Lösung | 8,5 | 8,5 | 8,5 | 8,5 | 8,5 | 8,5 | 8,5 | | |
| 4 %ige wäßrige Lösung | | | | | | | 8,5 | | 8,5 |
| Entschäumer[2)] | 0,2 | 0,2 | 0,2 | 0,2 | 0,2 | 0,2 | 0,2 | 0,2 | 0,2 |
| B | 20 | | 20 | | 20 | | 20 | | |
| BV | | 20 | | 20 | | 20 | | 20 | |
| BV' | | | | | | | | | 20 |
| Feststoff[3)] | 39,2 | 39,2 | 40,5 | 40,5 | 39,2 | 39,2 | 36,2 | 36,3 | 36,3 |

1) Latekoll® D (BASF AG)

2) Lumiten® EL (BASF AG)

3) Kreide: Juraperle XM, mittlere Teilchengröße 5,7 µm (Fa. Ulmer Füllstoffvertrieb)

Beispiel 4

Die Testergebnisse sind in Tabelle 3 niedergelegt. Geprüft wurde

- Schälfestigkeit nach DIN 16860
- Scherfestigkeit nach DIN 16860

- Naßanzugsvermögen
  Der Klebstoff wird mit einem DIN-Rakel auf eine Zementfaserplatte (z.B. Eternit® 2000) (20 x 50 cm) in Abzugsrichtung aufgetragen, Auftragsmenge ca. 350 -400 g/m$^2$. Nadelfilzbeläge (NBB Streifen) werden nach 10 Minuten Ablüften in das Kleberbett eingelegt und mit einer 2,5 kg Walze durch 3 mal Hin- und Herrollen angepreßt. In den angegebenen Zeitabständen werden die Beläge mit einem Abzugsgerät abgezogen, und dabei die Zunahme des Abschälwiderstandes in N/5 cm bestimmt.

- Trockenanfaßvermögen
  Der Klebstoff wird mit DIN-Rakel auf eine Zementfaserplatte (z.B. Eternit® 2000 (20 x 50 cm) in Abzugsrichtung aufgetragen, Auftragsmenge ca. 250-300 g/m$^2$. PVC Streifen (Pegulan® B 1) werden nach unterschiedlicher Ablüftzeit in das Kleberbett eingelegt und mit einer 2,5 kg Walze durch Hin- und Herrollen (3 x) angepreßt. Anschließend werden die Streifen mit einem Abzugsgerät abgezogen und der Abschälwiderstand in N/5 cm bestimmt.

Wärmestandfestigkeit

5 Prüflinge (5 x 6 cm) werden nach einer Ablüftzeit von 5 Minuten gemäß DIN 16860 auf eine Zementfaserplatte (z.B. Eternit® 2000 geklebt und 14 Tage bei 23°C gelagert. Danach werden sie 30 Minuten bei 50°C temperiert, anschließend mit 2 kg belastet und bei 50°C im Umluftschrank bis zur Ablösung des Prüfstreifens dort belassen.

Angegeben ist die Zeit bis zur Ablösung.

Tabelle 3 Meßergebnisse

| | 1 | 1V | 2 | 2V | 3 | 3V | 4 | 4V | 4V' |
|---|---|---|---|---|---|---|---|---|---|
| Schälfestigkeit | | | | | | | | | |
| 10 Minuten | 15,4 | 12,2 | 27,7 | 26,0 | 29,0 | 23,8 | 24,5 | 19,1 | 23,2 |
| 60 Minuten | 10,8 | 7,9 | 19,0 | 15,3 | 14,9 | 16,7 | 21,2 | 16,4 | 20,2 |
| Scherfestigkeit | 0,6 | 0,5 | 0,6 | 0,5 | 0,6 | 0,6 | 0,7 | 0,6 | 0,7 |
| Naßanzugsvermögen [N/5 cm] | | | | | | | | | |
| 0 Minuten | | | | | 1 | 0 | 1 | 0 | |
| 10 Minuten | | | | | 31 | 11 | 13 | 6 | |
| 20 Minuten | | | | | 55 | 50 | 50 | 31 | |
| 30 Minuten | | | | | 58 | 57 | 68 | 55 | |
| Trockenanfaßvermögen [N/5 cm] | | | | | | | | | |
| 10 Minuten | | | | | 20 | 14 | 27 | 19 | |
| 20 Minuten | | | | | 52 | 45 | 57 | 20 | |
| 30 Minuten | | | | | 60 | 51 | 38 | 14 | |
| 45 Minuten | | | | | 59 | 30 | 27 | 8 | |
| Wärmestandfestigkeit [Minuten] | 16 | 7 | 87 | 15 | 48 | 37 | 181 | 48 | 95 |

## Patentansprüche

1. Verwendung einer Klebstoffzusammensetzung mit weniger als 2 Gew.-% organisches Lösemittel mit einem Flammpunkt unter 100°C nach DIN 51758 enthaltend

   A) einen wäßrigen Acrylatlatex und

   B) 30 bis 150 Gew.-%, bezogen auf den Feststoffgehalt des Acrylatlatex A), einer Mischung aus

      b1) 50 bis 95 Gew.-%, bezogen auf die Mischung, mindestens eines klebrigmachenden Harzes und

      b2) 5 bis 50 Gew.-%, bezogen auf die Mischung, einer Verbindung der allgemeinen Formel I

$$R^1\text{-}O\text{-}(X\text{-}O)_n\text{-}R^2 \qquad \text{I,}$$

      in der X ein Alkylen mit 2 bis 4 C-Atomen, n eine ganze Zahl von 1 bis 8 und $R^1$ und $R^2$ Wasserstoff oder ein Aryl- oder Alkarylrest mit 6 bis 12 C-Atomen sind, wobei $R^1$ und $R^2$ nicht gleichzeitig Wasserstoff sind, zum Verkleben von Fußbodenbelägen.

2. Verwendung gemäß Anspruch 1, dadurch gekennzeichnet, daß $R^1$ Wasserstoff, X $-(CH_2)_2-$, n 1-3 und $R^2$ Phenyl ist.

3. Verwendung gemäß Anspruch 1, dadurch gekennzeichnet, daß die Klebstoffzusammensetzung zusätzlich 50 bis 250 Gew.-% bezogen auf Feststoffgehalt des Acrylatlatex A), mindestens eines Füllstoffs C) enthält.

## Claims

1. The use of an adhesive composition having less than 2 % by weight of organic solvent with a flush point below 100°C according to DIN 51758, containing

   A) an aqueous acrylate latex and
   B) 30 to 150 % by weight, based on the solids content of the acrylate latex A), of a mixture of

      b1) 50 to 95 % by weight, based on the mixture, of at least one tackifying resin and
      b2) 5 to 50 % by weight, based on the mixture, of a compound of the formula I

$$R^1\text{-}O\text{-}(X\text{-}O)_n\text{-}R^2 \qquad \text{I}$$

      where X is alkylene of 2 to 4 carbons, n is an integer from 1 to 8 and $R^1$ and $R^2$ are each hydrogen or aryl or alkaryl of 6 to 12 carbon atoms, where $R^1$ and $R^2$ are not both hydrogen, for bonding floor coverings.

2. The use as claimed in claim 1, where $R^1$ is hydrogen, X is $-(CH_2)_2-$, n is 1-3 and $R^2$ is phenyl.

3. The use as claimed in claim 1, wherein the adhesive composition additionally contains from 50 to 250 % by weight, based on the solids content of the acrylate latex A), of at least one filler C).

## Revendications

1. Utilisation d'une composition d'adhésif avec moins de 2% en poids de solvant organique, avec un point d'inflammation inférieur à 100°C selon DIN 51758, contenant:

   A) un latex d'acrylate aqueux et
   B) 30 à 150% en poids, par rapport à la teneur en matières solides du latex d'acrylate A), d'un mélange de

b1) 50 à 95% en poids, par rapport au mélange, d'au moins une résine à pouvoir collant et
b2) 5 à 50% en poids, par rapport au mélange, d'un composé de formule générale I

$$R^1\text{-O-(X-O)}_n\text{-}R^2 \qquad I,$$

dans laquelle X est un groupement alkylène avec 2-4 atomes de carbone, n est un nombre entier de 1 à 8 et $R^1$ et $R^2$ représentent un atome d'hydrogène ou un groupement aryle ou alkaryle à 6-12 atomes de carbone, $R^1$ et $R^2$ ne représentant pas simultanément un atome d'hydrogène, pour le collage de revêtements de sol.

**2.** Utilisation selon la revendication 1, caractérisé en ce que $R^1$ représente un atome d'hydrogène, X représente $-(CH_2)_2-$, n vaut 1 à 3 et $R^2$ représente un groupement phényle.

**3.** Utilisation selon la revendication 1, caractérisé en ce que la composition d'adhésif contient en outre 50 à 250% en poids, par rapport à la teneur en matières solides du latex d'acrylate A), d'au moins une matière de charge C).